# EUROPEAN PATENT APPLICATION

(11) **EP 2 922 259 A1**
(43) Date of publication of application: **23.09.2015**
(21) Application number: 13855406.8
(22) Date of filing: 15.08.2013
(51) Int. Cl.: H04L 25/02

(54) **METHOD, DEVICE, AND BASE STATION FOR CHANNEL INTERFERENCE CANCELLATION**

(30) Priority: 19.11.2012 CN 201210467823
(71) Applicant: ZTE Corporation, Shenzhen, Guangdong 518057 (CN)
(72) Inventor: FENG, Liguo, Shenzhen Guangdong 518057 (CN); XU, Hongbo, Shenzhen Guangdong 518057 (CN); ZHANG, Linsheng, Shenzhen Guangdong 518057 (CN); HONG, Sihua, Shenzhen Guangdong 518057 (CN)
(74) Representative: Tischner, Oliver
(86) International application number: PCT/CN2013/081589
(87) International publication number: WO 2014/075475

(57) **Abstract**

An interference cancellation method and device and a base station are described, the method is applied to a base station, and used for an uplink specific channel in a Wideband Code Division Multiple Access (WCDMA) system, and includes: acquiring original antenna sample data to be cancelled is acquired; multi-path energy calculation is performed according to the original antenna sample data, and multiple target multi-path time delay information is determined according to a result of the calculation; signal reconstruction in the uplink specific channel is performed according to the original antenna data and the target multi-path time delay information, to obtain a reconstructed signal; and the reconstructed signal in the original antenna sample data is cancelled, to obtain target antenna data. The disclosure can provide interference cancellation of the uplink specific channel.

## Description

### TECHNICAL FIELD

The disclosure relates to the field of communications, and particularly to a channel interference cancellation method and device, and a base station.

### BACKGROUND

In a Wideband Code Division Multiple Access (WCDMA) communication system, different address codes are used to distinguish a user, a base station, a channel, and etc. However, undesirability of a self-correlation feature and a cross-correlation feature in a multi-path fading channel results in a multi-access interference between the user and the channel; because different phases of the used address code are not completely orthogonal and are influenced by transmission path time delay and noise, different multi-path signals of the same user are interfered by each other, that is a multi-path interference. When there are more user data, an influence of the above interference on system capacity is very obvious. This interference cannot be solved singly by a method of increasing a signal-to-noise ratio; otherwise finally the whole system may be crashed because of power increasing. While an interference cancellation technique can still increase the system capacity in a situation of not increasing or reducing the signal-to-noise ratio. A principle of the interference cancellation technique is to reconstruct a received signal of an uplink specific channel, to remove the interference from the received signal, and reduce the interference experienced by other users, so as to increase the system capacity. Currently an existing scheme generally is a method and a device, which partly implement interference cancelling or perform interference cancellation on a WCDMA communication system uplink specific channel single control channel or data channel, and an interference cancellation device for a WCDMA communication system uplink specific channel including a control channel and a service channel is not referred.

### SUMMARY

A purpose of an embodiment of the disclosure is to provide a channel interference cancellation method and device, and a base station, which are used for base station side uplink specific channel interference cancellation, and can provide interference cancellation of an uplink specific channel.

In order to implement the above purpose, an embodiment of the disclosure provides a channel interference cancellation method, applied to a base station, and used for an uplink specific channel in a WCDMA system, which includes:
acquiring original antenna sample data to be cancelled;
performing multi-path energy calculation according to the original antenna sample data, and determining multiple target multi-path time delay information according to a result of the calculation;
performing signal reconstruction in the uplink specific channel according to the original antenna data and the target multi-path time delay information, to obtain a reconstructed signal; and
cancelling the reconstructed signal in the original antenna sample data, to obtain target antenna data.

Wherein, preferably the channel interference cancellation method may further include:
performing descrambling and dispreading in the uplink specific channel, according to the original antenna data and the target multi-path time delay information, to obtain multi-path symbol data;
performing channel estimation according to the multi-path symbol data, to obtain a channel estimation value;
performing maximum ratio combination on the multi-path symbol data according to the channel estimation value; and
performing detecting and decoding processing on the multi-path symbol data completing the maximum ratio combination; wherein
the performing signal reconstruction in the uplink specific channel according to the original antenna data and the target multi-path time delay information, to obtain the reconstructed signal includes: performing the signal reconstruction in the uplink specific channel, according to the result of performing the detecting and decoding processing on the multi-path symbol data, to obtain the reconstructed signal.

Wherein, preferably the channel interference cancellation method may further include:
performing frequency offset estimation according to the multi-path symbol data, and performing frequency offset compensation on the multi-path symbol data according to the result of the frequency offset estimation.

Wherein, preferably when the channel interference cancellation method is applied to a control channel in the uplink specific channel, the performing the detecting and decoding processing on the multi-path symbol data may include:
performing TFCI decoding on the multi-path symbol data in an uplink specific control channel; and
performing ACK and CQI decoding and encoding on the multi-path symbol data in a high speed uplink specific control channel; and
performing E-TFCI decoding on the multi-path symbol data in an enhanced uplink specific control channel.

Wherein, preferably the performing the detecting and decoding processing on the multi-path symbol data may further include:
performing threshold detection on the multi-path symbol data in the uplink specific control channel.

Wherein, preferably when the channel interference cancellation method is applied to a data channel in the uplink specific channel, the performing the detecting and decoding processing on the multi-path symbol data may include:
performing soft symbol bit-slicing processing on the multi-path symbol data, to obtain soft symbol data of an uplink specific data channel.

Wherein, preferably when the channel interference cancellation method is applied to an enhanced uplink specific data channel, the performing the detecting and decoding processing on the multi-path symbol data may further include:
performing successively de-interleaving, rate de-matching, HARQ combination, Turbo decoding, and CRC verification on the soft symbol data in the enhanced uplink specific data channel.

Wherein, preferably when the channel interference cancellation method is applied to a data channel in the uplink specific channel, the performing the descrambling and dispreading in the uplink specific channel, according to the original antenna data and the target multi-path time delay information, to obtain the multi-path symbol data may include:
performing multiple descrambling and dispreading according to the original antenna data and the target multi-path time delay information, to obtain the multi-path symbol data.

Wherein, preferably when the channel interference cancellation method is applied to a control channel in an uplink specific control channel, the performing the signal reconstruction in the uplink specific channel, according to the result of performing the detecting and decoding processing on the multi-path symbol data, to obtain the reconstructed signal may include:
delaying according to a pre-set time delay parameter; after delaying according to the pre-set time delay parameter, performing spreading and scrambling on the multi-path symbol data according to the result of performing the detecting and decoding processing on the multi-path symbol data;
determining a phase offset rotation filtering coefficient, according to the channel estimation value; and
performing filtering on the spread and scrambled multi-path symbol data, according to the phase offset rotation filtering coefficient, to obtain the reconstructed signal.

Wherein, preferably when the channel interference cancellation method is applied to an enhanced uplink specific channel, the performing the signal reconstruction in the uplink specific channel, according to the result of performing the detecting and decoding processing on the multi-path symbol data, to obtain the reconstructed signal may include:
performing channel encoding in the enhanced uplink specific channel, according to the result of performing the detecting and decoding processing on the multi-path symbol data, to obtain a channel encoding symbol;
performing spreading and scrambling on the channel encoding symbol;
calculating a channel estimation parameter according to the channel encoding symbol and the original antenna data;
determining a phase offset rotation filtering coefficient, according to the channel estimation parameter; and
performing filtering on the spread and scrambled channel encoding symbol, according to the phase offset rotation filtering coefficient, to obtain the reconstructed signal.

Wherein, preferably the performing the signal reconstruction in the uplink specific channel, according to the result of performing the detecting and decoding processing on the multi-path symbol data, to obtain the reconstructed signal may further include:
performing alignment and accumulation on the reconstructed signal.

In order to achieve the above purpose, an embodiment of the disclosure further provides a channel interference cancellation device, applied to a base station, and used for an uplink specific channel in a WCDMA system, which includes:
an acquiring module, configured to acquire original antenna sample data to be cancelled;
a multi-path energy calculating module, configured to perform multi-path energy calculation according to the original antenna sample data, and determine multiple target multi-path time delay information according to a result of the calculation;
a reconstructing module, configured to perform signal reconstruction in the uplink specific channel according to the original antenna data and the target multi-path time delay information, to obtain a reconstructed signal; and
a cancelling module, configured to cancel the reconstructed signal in the original antenna sample data, to obtain target antenna data.

The above acquiring module, multi-path energy calculating module, reconstructing module, and cancelling module may be implemented by adopting a Central Processing Unit (CPU), a Digital Signal Processor (DSP), or a Field-Programmable Gate Array (FPGA).

Wherein, preferably the channel interference cancellation device may further include:
a descrambling and dispreading module, configured to perform descrambling and dispreading in the uplink specific channel, according to the original antenna data and the target multi-path time delay information, to obtain multi-path symbol data;
a channel estimation value determining module, configured to perform channel estimation according to the multi-path symbol data, to obtain a channel estimation value;
a maximum ratio combining module, configured to perform maximum ratio combination on the multi-path symbol data according to the channel estimation value; and
a processing module, configured to perform detecting and decoding processing on the multi-path symbol data completing the maximum ratio combination; wherein
the reconstructing module may be further configured to perform the signal reconstruction in the uplink specific channel, according to a result of performing the detecting and decoding processing on the multi-path symbol data, to obtain the reconstructed signal.

The above descrambling and dispreading module, channel estimation value determining module, maximum ratio combining module, and processing module may be implemented by adopting the CPU, the DSP, or the FPGA.

Wherein, preferably the channel interference cancellation device may further include:
a frequency offset estimating module, configured to perform frequency offset estimation according to the multi-path symbol data, and perform frequency offset compensation on the multi-path symbol data according to the result of the frequency offset estimation.

The above frequency offset estimating module may be implemented by adopting the CPU, the DSP, or the FPGA.

Wherein, preferably when the channel interference cancellation device is applied to a control channel in the uplink specific channel, the processing module may be further configured to:
perform TFCI decoding on the multi-path symbol data in an uplink specific control channel;
perform ACK and CQI decoding and encoding on the multi-path symbol data in a high speed uplink specific control channel; and
perform E-TFCI decoding on the multi-path symbol data in an enhanced uplink specific control channel.

Wherein, preferably the processing module may be further configured to:
perform threshold detection on the multi-path symbol data in the uplink specific control channel.

Wherein, preferably when the channel interference cancellation device is applied to a data channel in the uplink specific channel, the processing module may be further configured to:
perform soft symbol bit-slicing processing on the multi-path symbol data, to obtain soft symbol data of an uplink specific data channel.

Wherein, preferably when the channel interference cancellation device is applied to an enhanced uplink specific data channel, the processing module may be further configured to:
perform successively de-interleaving, rate de-matching, HARQ combination, Turbo decoding, and CRC verification on the soft symbol data in the enhanced uplink specific data channel.

Wherein, preferably when the channel interference cancellation device is applied to a data channel in the uplink specific channel, the descrambling and dispreading module may be further configured to:
perform multiple descrambling and dispreading according to the original antenna data and the target multi-path time delay information, to obtain the multi-path symbol data.

Wherein, preferably when the channel interference cancellation device is applied to a control channel in the uplink specific channel, the reconstructing module may include:
a delaying module, configured to delay according to a pre-set time delay parameter;
a first spreading and scrambling module, configured, after delaying according to the pre-set time delay parameter, to perform spreading and scrambling on the multi-path symbol data according to the result of performing the detecting and decoding processing on the multi-path symbol data;
a first filtering coefficient determining module, configured to determine a phase offset rotation filtering coefficient, according to the channel estimation value; and
a first filtering module, configured to perform filtering on the spread and scrambled multi-path symbol data, according to the phase offset rotation filtering coefficient, to obtain the reconstructed signal.

The above delaying module, first spreading and scrambling module, first filtering coefficient determining module, and first filtering module may be implemented by adopting the CPU, the DSP, or the FPGA.

Wherein, preferably when the channel interference cancellation device is applied to an enhanced uplink specific channel, the reconstructing module may include:
a channel encoding module, configured to perform channel encoding in the enhanced uplink specific channel, according to the result of performing the detecting and decoding processing on the multi-path symbol data, to obtain a channel encoding symbol;
a second spreading and scrambling module, configured to perform spreading and scrambling on the channel encoding symbol;
a channel estimation parameter determining module, configured to calculate a channel estimation parameter according to the channel encoding symbol and the original antenna data;
a second filtering coefficient determining module, configured to determine a phase offset rotation filtering coefficient, according to the channel estimation parameter; and
a second filtering module, configured to perform filtering on spread and scrambled channel encoding symbol, according to the phase offset rotation filtering coefficient, to obtain the reconstructed signal.

The above channel encoding module, second spreading and scrambling module, channel estimation parameter determining module, second filtering coefficient determining module, and second filtering module may be implemented by adopting the CPU, the DSP, or the FPGA.

Wherein, preferably the reconstructing module may further include:
an aligning and accumulating module, configured to perform alignment and accumulation on the reconstructed signal.

The above aligning and accumulating module may be implemented by adopting the CPU, the DSP, or the FPGA.

In order to achieve the above purpose, an embodiment of the disclosure further provides a base station, which includes any one of the channel interference cancellation devices described above.

The embodiment of the disclosure has the following advantages:
The embodiment of the disclosure can implement reconstruction and interference cancellation of a specific control channel (DPCCH/HS-DPCCH/E-DPCCH) and a specific data channel (E-DPDCH);
the embodiment of the disclosure has a performance higher than that of a traditional uplink specific control channel interference device, and improves an uplink specific physical channel receiving performance;
the embodiment of the disclosure performs threshold control or decoding verification when reconstructing a signal, and accuracy of the reconstructed signal is high; and
the embodiment of the disclosure supports flexibly scheduled DPDCH/EDPDCH channel processing, can repeatedly perform demodulation in antenna data cancelled many times for a user experiencing decoding error according to a processing time limit constraint of an actual system, and improves a user decoding performance.

### BRIEF DESCRIPTION OF THE DRAWINGS

Fig. 1 is a flowchart of a channel interference cancellation method of an embodiment of the disclosure;
Fig. 2 is a structure diagram of DPCCH/HSDPCCH signal reconstruction of an embodiment of the disclosure;
Fig. 3 is a structure diagram of EDPDCH/EDPCCH signal reconstruction of an embodiment of the disclosure;
Fig. 4 is a structure diagram of a channel interference cancellation device of an embodiment of the disclosure;
Fig. 5 is a structure diagram of an interference cancellation device function entity of an embodiment of the disclosure;
Fig. 6 is a structure diagram of an antenna data managing and cancelling module in an interference cancellation device function entity of an embodiment of the disclosure; and

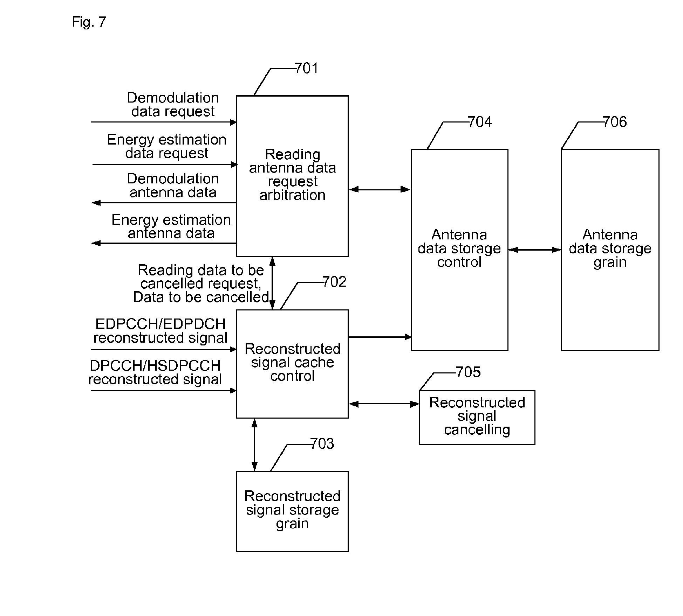

Fig. 7 is a structure diagram of a data information memory in an interference cancellation device function entity of an embodiment of the disclosure.

### DETAILED DESCRIPTION

In order to make a technical problem to be solved by an embodiment of the disclosure, a technical scheme, and an advantage more clear, detail description will be performed below in combination with the drawings and specific embodiments.

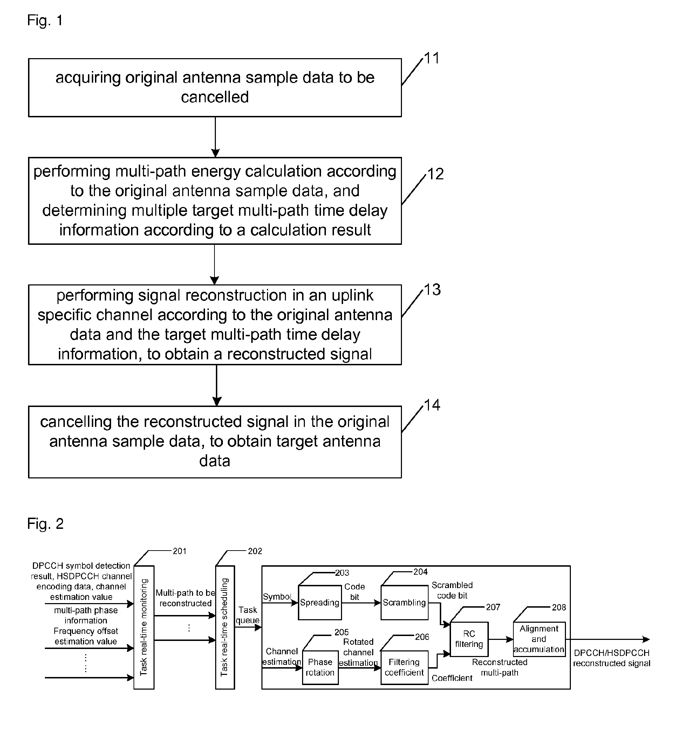

A channel interference cancellation method of an embodiment of the disclosure is used for a base station, as shown in Fig. 1, and the channel interference cancellation method is used for an uplink specific channel in a WCDMA system, and includes:
Step 11: acquiring original antenna sample data to be cancelled;
Step 12: performing multi-path energy calculation according to the original antenna sample data, and determining multiple target multi-path time delay information according to a result of the calculation;
Step 13: performing signal reconstruction in the uplink specific channel according to the original antenna data and the target multi-path time delay information, to obtain a reconstructed signal; and
Step 14: cancelling the reconstructed signal in the original antenna sample data, to obtain target antenna data.

The above method first acquires original antenna sample data to be cancelled; performs the multi-path energy calculation in a certain searching window scope on the antenna sample data, filters and sorts multi-path energy, and finally searches out multiple (generally 8) target multi-path time delay information for each user; performs signal reconstruction in the uplink specific channel according to the original antenna data and the target multi-path time delay information, to obtain the reconstructed signal; obtains the target antenna data from a cancelled and reconstructed signal in the original antenna sample data.

This method may provide interference cancellation of the uplink specific channel including a control channel and a data channel, has simultaneously a performance higher than that of a traditional uplink specific control channel interference device, and improves an uplink specific physical channel receiving performance.

Wherein, preferably before reconstructing the signal in step 13, the method further includes:
performing descrambling and dispreading in the uplink specific channel, according to the original antenna data and the target multi-path time delay information, to obtain multi-path symbol data;
performing channel estimation according to the multi-path symbol data, to obtain a channel estimation value;
performing maximum ratio combination on the multi-path symbol data according to the channel estimation value; and
performing detecting and decoding processing on the multi-path symbol data completing the maximum ratio combination; wherein
Step 13 specifically includes: performing the signal reconstruction in the uplink specific channel, according to the result of performing detecting and decoding processing on the multi-path symbol data, to obtain the reconstructed signal.

The channel interference cancellation method of the embodiment of the disclosure, before performing the signal reconstruction, further needs to perform descrambling and dispreading in the uplink specific channel, according to the original antenna data and the target multi-path time delay information, to obtain the multi-path symbol data; and performs channel estimation according to the multi-path symbol data, to obtain the channel estimation value, and performs the channel estimation on the uplink specific control channel generally according to known pilot frequency information; completes RAKE combination and channel outgoing modulation according to the channel estimation value and the multi-path symbol data, to obtain symbol data of a DPCCH, E-DPCCH, and HS-DPCCH channel; performs the detecting and decoding processing on the multi-path symbol data completing the combination; performs the signal reconstruction according to the target multi-path time delay information and the result of performing the detecting and decoding processing on the multi-path symbol data. Accuracy of the reconstructed signal is improved by performing the detecting and decoding processing before reconstructing the signal.

Wherein, preferably the method further includes:
performing frequency offset estimation according to the multi-path symbol data, and performing frequency offset compensation on the multi-path symbol data according to the result of the frequency offset estimation.

Generally the frequency offset estimation is performed through input DPCCH channel multi-path symbol data; conjugated multiplication is performed on the multi-path symbol data of each path continuous time; the result is accumulated with K time slots (generally K is 15, namely 1 frame), and then the accumulated results of all multi-paths are added, to obtain and output a final frequency offset estimation result; and the frequency offset compensation is performed on the multi-path symbol data according to the frequency offset estimation result.

In the above channel interference cancellation method, the detecting and decoding processing on the multi-path symbol data shall be performed separately aiming at different control channels and data channels, specifically:
1. In the control channel:
   TFCI decoding is performed on the multi-path symbol data in the uplink specific control channel;
   ACK and CQI decoding and encoding are performed on the multi-path symbol data in a high speed uplink specific control channel; and
   E-TFCI decoding is performed on the multi-path symbol data in an enhanced uplink specific control channel.
2. In the data channel:
   performing soft symbol bit-slicing processing on the multi-path symbol data, to obtain soft symbol data of an uplink specific data channel.

Wherein, in the control channel, the method further includes: performing threshold detection on the multi-path symbol data in the uplink specific control channel. A symbol having low signal amplitude in a DPCCH symbol field is marked as non-reconstruction data, and is not reconstructed during DPCCH channel symbol reconstruction processing.

Wherein, in the data channel, the method further includes successively performing de-interleaving, rate de-matching, HARQ combination, Turbo decoding, and CRC verification on soft symbol data in an enhanced uplink specific data channel. With regard to symbol data of a DPDCH and E-DPDCH channel, a symbol mean value of each TTI is calculated according to a length of the TTI, all symbol data of this TTI is divided by this mean value and then is multiplied by a fixed calibration constant to obtain and output 8 bit length DPDCH and E-DPDCH channel soft symbol data, if E-DPDCH channel soft symbol data is processed then subsequent processing is started, de-interleaving, rate de-matching, HARQ combination, and Turbo decoding are successively performed; CRC calculation of a non-CRC additional part in a Turbo decoding result is completed, according to a 3GPP 25213 protocol CRC calculation method, and a CRC calculation result is compared with CRC additional data; if a comparison result is consistent, then it is considered that received data is correct, otherwise the received data is wrong and then a CRC additional part is removed from the Turbo decoding result so as to perform subsequent signal reconstruction.

Simultaneously, in order to improve a user decoding performance, when the channel interference cancellation method is applied to the data channel in the uplink specific channel, the performing the descrambling and dispreading in the uplink specific channel, according to the original antenna data and the target multi-path time delay information, to obtain multi-path symbol data specifically is:
performing multiple descrambling and dispreading according to the original antenna data and the target multi-path time delay information, to obtain the multi-path symbol data.

Not correctly demodulated user data are iterated many times according to an external demodulating and scheduling command, to interference from other users on the not correctly demodulated user data can be removed adequately, and finally correct user data are demodulated. The embodiment of the disclosure supports flexibly scheduled DPDCH/EDPDCH channel processing, can repeatedly perform demodulation in antenna data cancelled many times for a user experiencing decoding error according to a processing time limit constraint of an actual system, and improves the user decoding performance.

Wherein, preferably when the channel interference cancellation method is applied to the control channel in the uplink specific channel, step 13 specifically is:
Step 131a: delaying according to a pre-set time delay parameter;
Step 132a: after delaying according to the pre-set time delay parameter, performing spreading and scrambling on the multi-path symbol data according to the result of performing the detecting and decoding processing on the multi-path symbol data;
Step 133a: determining a phase offset rotation filtering coefficient, according to the channel estimation value; and
Step 134a: performing filtering on the spread and scrambled multi-path symbol data, according to the phase offset rotation filtering coefficient, to obtain the reconstructed signal.

Wherein, preferably when the channel interference cancellation method is applied to an enhanced uplink specific channel, step 13 specifically is:
Step 131b: performing channel encoding in the enhanced uplink specific channel, according to the result of performing the detecting and decoding processing on the multi-path symbol data, to obtain a channel encoding symbol;
Step 132b: performing spreading and scrambling on the channel encoding symbol;
Step 133b: calculating a channel estimation parameter according to the channel encoding symbol and the original antenna data;
Step 134b: determining a phase offset rotation filtering coefficient, according to the channel estimation parameter; and
Step 135b, performing filtering on the spread and scrambled channel encoding symbol, according to the phase offset rotation filtering coefficient, to obtain the reconstructed signal.

First, according to the result of performing the detecting and decoding processing on the multi-path symbol data, with regard to an E-DPDCH channel, the result is then a CRC verification result; an M parameter table is acquired by querying a table according to a 3GPP 25212 protocol; 10 parameters in a line of the M parameter table separately perform a multiply-add operation with 10 bits encoded data, and a final result modulo 2 is an encoding output symbol. The M parameter table is calculated line-by-line, to obtain all control channel encoding symbols;
relevant estimation is performed according to recoded channel bit information and corresponding antenna data thereof, to calculate the channel estimation parameter on each path on each channel of an EDCH;
the signal reconstruction of each channel of the EDCH further includes performing in accordance with the control channel encoding symbol and the channel estimation parameter.

Channel reconstruction procedures of different channels are separately explained below.
1. A reconstruction procedure of a DPCCH/HSDPCCH signal:
   fixed time delay is performed according to multi-path time delay information, for a DPCCH and HS-DPCCH channel reconstructed signal filtering, with regard to a DPCCH and HS-DPCCH, reconstruction time delays thereof are different, so 2 kinds of time delays are needed to be performed; in the embodiment of the disclosure, a DPCCH delays 2.5-3 slots, and a HS-DPCCH delays 5-7 slots; a specific value is determined through a configuration parameter; DPCCH channel reconstruction is started when 2.5-3 slots are delayed fixedly, and HS-DPCCH channel reconstruction is started when 5-7 slots are delayed;
   spreading is performed on various symbols according to a spreading factor, wherein a spreader includes an Orthogonal Variable Spread Frequency (OVSF) code generating device and a spread processing device. The OVSF code generates a code-channel number of a channel provided by a protocol for various different channels, which may be generated in serials one code bit by one code bit, or may be generated in parallel by multiple code bits which may be configured; the spreading processing only needs to multiply a symbol by a generated OVSF code sequence, then obtaining a spreading operation from a symbol level to a code bit level;
   aiming at different users, different scrambling codes are allocated; according to an initial scrambling code and a scrambler provided by the protocol, code bit level data are scrambled; wherein the scrambler may perform scrambling in serials one code bit by one code bit, and may also be performed in parallel through the multiple code bits which can be configured; in addition, spreading and scrambling may also be implemented jointly, that is performing a single table query on the symbol to implement the spreading and the scrambling, according to an obtained OVSF code and the scrambling code;
   simultaneously phase offset rotation is performed according to a corresponding channel estimation value, this step is used to simulate influence of the channel on a signal, wherein the step includes an initial phase offset and a frequency offset step are added to obtain a final phase offset, and a plural multiplication operation of the channel estimation value and the final phase offset is performed;
   a filtering coefficient is generated according to channel estimation after multi-path offsetting and phase offset rotation, and RC filtering is performed on the spread and scrambled code bit; the filtering may be performed one code bit by one code bit, and may also be performed in parallel in accordance with multiple code bits which can be configured, to this end reconstruction of the symbol after encoding the DPCCH/HSDPCCH is then completed.

Because transmission of the signal sent by each user in a space may experience multi-path delay transmission such as reflection, diffraction and etc., and then reaches a receiver, therefore there are many multi-path delays of receiving the same user signal, and the above description of a reconstruction operation is the reconstruction operation of each multi-path symbol to be reconstructed. Reconstruction for each channel of each user may be separately allocated with a fixed reconstruction unit/reconstruction resource, or also probably all channels of all user time division multiplex the same (or several) reconstruction resource, for the former it only needs to duplicate multiple reconstruction calculation units in accordance with the above description specifically for each channel of each user, and for the former it then needs to solve a problem of coordinating a shared resource. Here, the embodiment of the disclosure, aiming at the DPCCH/HSDPCCH channels of all users time division multiplexing the same reconstruction resource, gives an implementation scheme, as shown in Fig. 2, this scheme needs:
a reconstruction task real-time monitoring module 201, which accords with a high layer software configuration, or performs real-time scan on all multi-paths of two kinds of channels of all users and performs self-judgment in accordance with a certain rule, to obtain a multi-path to be reconstructed;
a reconstruction task real-time scheduling module 202, which sorts the monitored multi-paths to be reconstructed, to form a task queue, and the task queue is scheduled to the following reconstruction operation unit in a sequence: a cell ID, an antenna ID, a user ID, and etc.

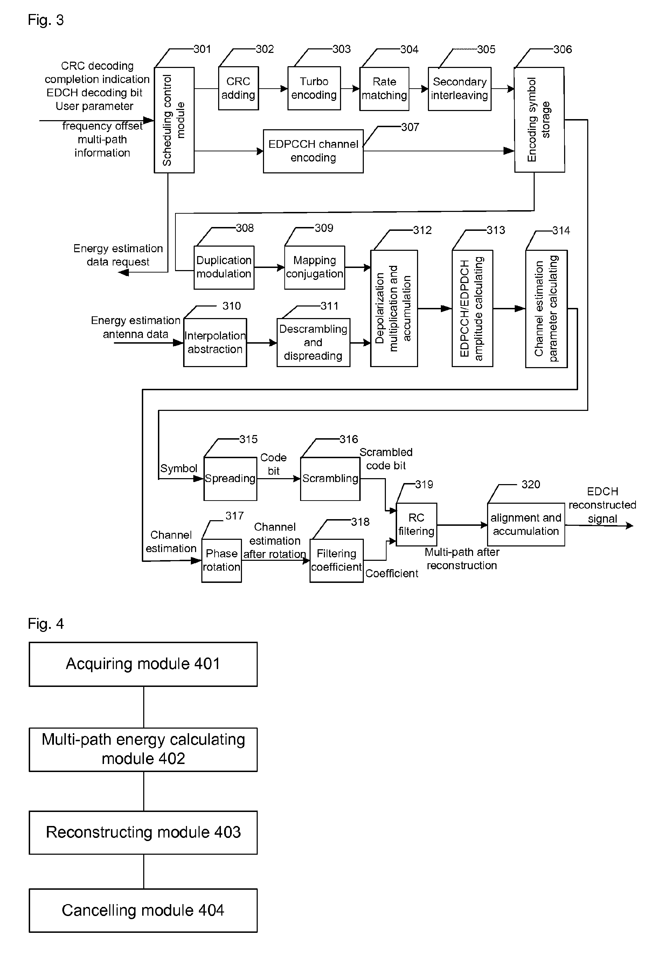

2. A reconstruction procedure of an EDPCCH/EDPDCH signal, as shown in Fig. 3:
   a scheduling control module 301 is a master control unit of EDPDCH/EDPCCH signal reconstruction, which receives a CRC verification result and performs parameter preparation; after the parameter preparation is completed, acquires data to be encoded according to an parameter indication, and starts channel symbol encoding; after symbol encoding is completed, sends an energy estimation data request, and simultaneously starts channel estimation parameter calculation; and when the channel estimation parameter calculation is completed, starts the reconstruction operation.

Channel encoding is divided into control channel encoding and data channel encoding:
(1) A control channel encoding module is specifically an EDPCCH channel encoding module 307, which acquires the M parameter table by querying the table according to the 3GPP 25212 protocol, 10 parameters in a line of the M parameter table separately perform the multiply-add operation with 10 bits encoded data, and the final result modulo 2 is the encoding output symbol. The M parameter table is calculated line-by-line, to obtain all control channel encoding symbols.
(2) A data channel encoding unit is mainly composed of the following modules:
   a CRC adding module 302 adds a CRC result obtained from data to be encoded through a CRC operation unit into a tail of an encoded data stream, according to a 3GPP 25212 protocol CRC calculation method; after CRC addition is completed, performs filling bit addition, and divides the data stream to be encoded into several turbo encoding blocks, to prepare data for downstream turbo encoding;
   a turbo encoding module 303 is in charge of turbo encoding having a 1/3 rate, including interleaving calculation and encoding processing, and is mainly divided into three parts internally, namely a data storage space, an interleaving processing module, a sub-encoder; the data storage space is used to cache code block data before encoding; the interleaving processing module is in charge of completing interleaving calculation, to obtain an address of interleaved data in the data storage space, and reading out the interleaved data stream from the data storage space. The sub-encoder is used to complete data encoding before and after interleaving, and generate a stream of verification 1 bit, and verification 2 bit. A turbo encoded system bit, verification 1 bit, and verification 2 bit, are output in parallel; a bit wide of each path is two bits, one bit is an output end mark, and one bit is turbo encoding data. Three paths of data are stored into corresponding three FIFOs to prepare for a downstream rate matching operation.

A rate matching module 304 completes a rate matching function according to the 3GPP 25212 protocol, and implements bit data punching, repeating and transparent transmitting. Finally the system bit experiencing the rate matching operation, the verification 1 bit, and the verification 2 bit are collected, and three paths of parallel data are integrated into one path of serial data.

A secondary interleaving processing module 305, performs secondary interleaving on a collected continuous bit stream by taking a physical channel as a unit, calculates an interleaving address, namely a position of a current information symbol in an encoding symbol storage 306 after being interleaved, and sends the data and the address to the module 306.

The encoding symbol storage 306 is used to manage and store channel encoding symbol data. A data channel symbol and a control channel symbol are stored in different areas. The control channel performs storage in a control channel data area in sequence according to an input indication. The data channel stores a corresponding encoding symbol into a corresponding space according to the address and data output by the secondary interleaving processing module 305.

Encoding of the data channel is completed through the above modules.

A channel estimation parameter calculating module 314 performs relevant estimation according to re-encoded channel bit information and corresponding antenna data thereof, and calculates a channel estimation parameter on each path on each channel of an EDCH. The following modules are mainly included:

A duplication modulation module 308 reads symbol data from the module 306 and simultaneously performs duplication processing, and judges duplication according to an SF, mainly in order to guarantee symbol number consistency when depolarizing later, to simply multiplication operation. Data modulation is performed on data completing the duplication in accordance with a BPSK and 4PAM modulation method. The data completing modulation are transmitted to a mapping conjugation module 309.

The mapping conjugation module 309 first performs I/Q mapping on the data completing the modulation, and determines whether code channel data are mapped into a path I or into a path Q, according to an I/Q indication index and a code channel type. The data after the I/Q mapping experience conjugation processing and then are sent to a downstream depolarization multiplication and accumulation module 312, participating in depolarization and accumulation calculation.

An interpolation abstraction module 310 completes interpolation and abstraction of the antenna data. Interpolation processing is in charge of interpolation operating the antenna data having twice precision into the antenna data having 8 times precision. A substance is that one code bit contains two sample points having the twice precision, and 8 sample points having 8 times precision are obtained after the operation. However, during subsequent processing, only a certain sample point having the 8 times precision in one code bit is needed, therefore only one sample point is needed to be sampled and transmitted from 8 sample points completing the interpolation to a downstream descrambling and dispreading module 311, not all sample points are needed to be transmitted, and a resource can be saved to a greater degree.

The descrambling and dispreading module 311 completes generation of a spreading code, a long scrambling code and a mixed PN code, and descrambling and dispreading of the antenna data. The data experiencing descrambling and dispreading are transmitted to the module 312, to prepare for participating in a relevant operation and accumulation thereof.

The depolarization multiplication and accumulation module 312 performs 2 chips accumulation on the data from the descrambling and dispreading module 311, an accumulation result and the data encoded by the mapping conjugation module 309 are multiplied and depolarized. A multiplication resulted is divided in accordance with multiple paths, and is accumulated to 32 chips. Frequency offset compensation is performed on the data accumulated to 32 chips, and precision of the frequency offset compensation is 64 chips; the data after the frequency offset compensation then experience 8 times accumulation and adjustment, to obtain a channel estimation parameter having a symbol level (256 chips), and the channel estimation parameter having the corresponding symbol level is sent to an EDPCCH/EDPDCH amplitude calculating module 313 for amplitude estimation.

The EDPCCH/EDPDCH amplitude calculating module 313 is used to calculate amplitude energy of the control channel and the data channel. First, the symbol data sent by the depolarization multiplication and accumulation module 312 are accumulated and the accumulated data are 30 symbol data belonging to the same path of the same task. A data channel amplitude energy value is: a quadratic sum of a real part and an imaginary part of a data channel accumulation value is obtained, all paths corresponding to one task are accumulated, and what obtained finally is data channel amplitude energy. Control channel amplitude energy calculation is: multiplication between the real parts and multiplication between the imaginary parts of a corresponding value obtained by accumulating the control channel and the data channel are obtained, and then the results are accumulated to obtain an energy value of one path, and the energy values belonging to all paths of one task are accumulated to obtain control channel amplitude energy. The EDPCCH/EDPDCH amplitude calculating module 313 transmits the calculated control channel and data channel amplitude energy, and a data channel symbol level channel estimation parameter of the depolarization multiplication and accumulation module 312, to the downstream channel estimation parameter calculating module 314, to perform final channel estimation parameter calculation.

The channel estimation parameter calculating module 314 calculates a final channel estimation parameter. One user at least has two channels, namely an EDPCCH and an EDPDCH1, and has at most 5 channels, namely the EDPCCH, the EDPDCH1, an EDPDCH2, an EDPDCH3, and an EDPDCH4. Wherein, the channel estimation parameters of the DPDCH1 and the DPDCH2 are identical, the channel estimation parameters of the DPDCH3 and the DPDCH4 are identical, therefore according to an actual user channel number, at most three channels namely the EDPCCH, the EDPDCH1, and the EDPDCH3 are needed to be calculated. Channel estimation parameter calculation of the EDPDCH1: accumulation and bit-slicing of 16 symbols are performed according to the data channel symbol level channel estimation parameter from the uplink module 313, to obtain the channel estimation parameter of the EDPDCH1 channel. The channel estimation parameter calculation of the EDPCCH: a ratio between the control channel amplitude energy and the data channel amplitude energy is calculated, amplitude adjustment is performed on the channel estimation parameter of the EDPDCH1 according to the ratio to obtain the channel estimation parameter of the EDPCCH channel. The channel estimation parameter calculation of the EDPDCH3: removing left 5 bits, removing left 3 bits, removing left 2 bits and removing left 0 bit are separately performed on the real part and the imaginary part of the channel estimation parameter of the EDPDCH1, and the 4 results are accumulated, and saturated bit-slicing processing is performed on 6 bits at a tail of the accumulated result, and the obtained result is the channel estimation parameter of the EDPDCH3.

A channel estimation parameter determination procedure is completed through the above modules.

The spreading is performed on each input EDPCCH/EDPDCH encoding symbol according to a spreading factor, wherein a spreader contains an OVSF code generating device and a spreading processing device, and the OVSF code generates the code-channel number of the channel provided by the protocol for various different channels, which may be generated in serials one code bit by one code bit, or may be generated in parallel by multiple code bits which may be configured; the spreading processing only needs to multiply the symbol by the generated OVSF code sequence, then obtaining the spreading operation from the symbol level to the code bit level;
code bit level data output by the spreader are taken as an input, aiming at different users, different scrambling codes are allocated; according to an initial scrambling code and a scrambler provided by the protocol, the code bit level data are scrambled; wherein the scrambler may perform scrambling in serials one code bit by one code bit, or may be performed in parallel by multiple code bits which may be configured; in addition, spreading and scrambling may also be implemented jointly, that is spreading and scrambling are implemented on the symbol by performing single table query, according to an obtained OVSF code and the scrambling code, an output is taken as the input of a RC filter;
simultaneously phase offset rotation is performed on the channel estimation value corresponding to each input symbol, this step is used to simulate influence of the channel on a signal, wherein the step includes the initial phase offset and the frequency offset step are accumulated to obtain the final phase offset, and plural multiplication operation of the channel estimation value and the final phase offset is performed;
a filtering coefficient is generated according to channel estimation after multi-path offsetting and phase offset rotation, to perform RC filtering on the spread and scrambled code bit; the filtering may be performed one code bit by one code bit, and may also be performed in parallel in accordance with multiple code bits which can be configured, and reconstruction of the symbol after encoding the DPCCH and the HSDPCCH is completed.

Wherein, preferably the performing the signal reconstruction in the uplink specific channel, according to the result of performing the detecting and decoding processing on the multi-path symbol data, to obtain the reconstructed signal specifically further includes:
performing alignment and accumulation on the reconstructed signal.

Each multi-path after reconstruction and a system timing of the original antenna data are aligned and accumulated, and then are stored into a storage unit; after a next multi-path completes the reconstruction, a previous accumulated result is read out, and is aligned and accumulated with it and then is stored into the storage unit; waiting until all multi-paths to be reconstructed, are reconstructed, aligned and accumulated in a unit time, uniformly cancellation is performed together with the original antenna sample data.

In order to guarantee alignment and accumulation efficiency, a flow line operation of the alignment and accumulation may be performed in each clock period, when it is detected that between a former path and a later path, the former path remains writing in flow into the storage unit, while the former path needs to read out (or has read out previously) its corresponding address data, namely the storage unit experiences a conflict of simultaneously reading and writing, or the conflict of successively reading and writing, according to different conflict situations, it is selected that the data is obtained to from different phases on a flow line to perform alignment and accumulation.

The embodiment of the disclosure also provides a channel interference cancellation device, applied to a base station, used for an uplink specific channel in a WCDMA system, as shown in Fig. 4, the device includes:
an acquiring module 401, configured to acquire original antenna sample data to be cancelled;
a multi-path energy calculating module 402, configured to perform multi-path energy calculation according to the original antenna sample data, and determine multiple target multi-path time delay information according to a result of the calculation;
a reconstructing module 403, configured to perform signal reconstruction in the uplink specific channel according to the original antenna data and the target multi-path time delay information, to obtain a reconstructed signal; and
a cancelling module 404, configured to cancel the reconstructed signal in the original antenna sample data, to obtain target antenna data.

Wherein, preferably the channel interference cancellation device further includes:
a descrambling and dispreading module, configured to perform descrambling and dispreading in the uplink specific channel, according to the original antenna data and the target multi-path time delay information, to obtain multi-path symbol data;
a channel estimation value determining module, configured to perform channel estimation according to the multi-path symbol data, to obtain a channel estimation value;
a maximum ratio combining module, configured to perform maximum ratio combination on the multi-path symbol data according to the channel estimation value; and
a processing module, configured to perform detecting and decoding processing on the multi-path symbol data completing the maximum ratio combination; wherein
the reconstructing module specifically is specifically configured to perform the signal reconstruction in the uplink specific channel, according to a result of performing the detecting and decoding processing on the multi-path symbol data, to obtain the reconstructed signal.

Wherein, preferably the channel interference cancellation device further includes:
a frequency offset estimating module, configured to perform frequency offset estimation according to the multi-path symbol data, and perform frequency offset compensation on the multi-path symbol data according to the result of the frequency offset estimation.

Wherein, preferably when the channel interference cancellation device is applied to a control channel in the uplink specific channel, the processing module is specifically configured to:
perform TFCI decoding on the multi-path symbol data in an uplink specific control channel; and
perform ACK and CQI decoding and encoding on the multi-path symbol data in a high speed uplink specific control channel; and
perform E-TFCI decoding on the multi-path symbol data in an enhanced uplink specific control channel.

Wherein, preferably the processing module is specifically further configured to:
perform threshold detection on the multi-path symbol data in the uplink specific control channel.

Wherein, preferably when the channel interference cancellation device is applied to a data channel in the uplink specific channel, the processing module is specifically configured to:
perform soft symbol bit-slicing processing on the multi-path symbol data, to obtain soft symbol data of an uplink specific data channel.

Wherein, preferably when the channel interference cancellation device is applied to the enhanced uplink specific data channel, the processing module is specifically further configured to:
perform successively de-interleaving, rate de-matching, HARQ combination, Turbo decoding, and CRC verification on the soft symbol data in the enhanced uplink specific data channel.

Wherein, preferably when the channel interference cancellation device is applied to a data channel in the uplink specific channel, the dispreading and descrambling module is specifically configured to:
perform multiple descrambling and dispreading according to the original antenna data and the target multi-path time delay information, to obtain the multi-path symbol data.

Wherein, preferably when the channel interference cancellation device is applied to a control channel in the uplink specific channel, the reconstructing module specifically is:
a delaying module, configured to delay according to a pre-set time delay parameter;
a first spreading and scrambling module, configured to, after delaying according to the pre-set time delay parameter, perform spreading and scrambling on the multi-path symbol data according to the result of performing the detecting and decoding processing on the multi-path symbol data;
a first filtering coefficient determining module, configured to determine a phase offset rotation filtering coefficient, according to the channel estimation value; and
a first filtering module, configured to perform filtering on the spread and scrambled multi-path symbol data, according to the phase offset rotation filtering coefficient, to obtain the reconstructed signal.

Wherein, preferably when the channel interference cancellation device is applied to the enhanced uplink specific channel, the reconstructing module specifically is:
a channel encoding module, configured to perform channel encoding in the enhanced uplink specific channel, according to the result of performing the detecting and decoding processing on the multi-path symbol data, to obtain a channel encoding symbol;
a second spreading and scrambling module, configured to perform spreading and scrambling on the channel encoding symbol;
a channel estimation parameter determining module, configured to calculate a channel estimation parameter according to the channel encoding symbol and the original antenna data;
a second filtering coefficient determining module, configured to determine a phase offset rotation filtering coefficient, according to the channel estimation parameter; and
a second filtering module, configured to perform filtering on spread and scrambled channel encoding symbol, according to the phase offset rotation filtering coefficient, to obtain the reconstructed signal.

Wherein, preferably the reconstructing module specifically further includes:
an aligning and accumulating module, configured to perform alignment and accumulation on the reconstructed signal.

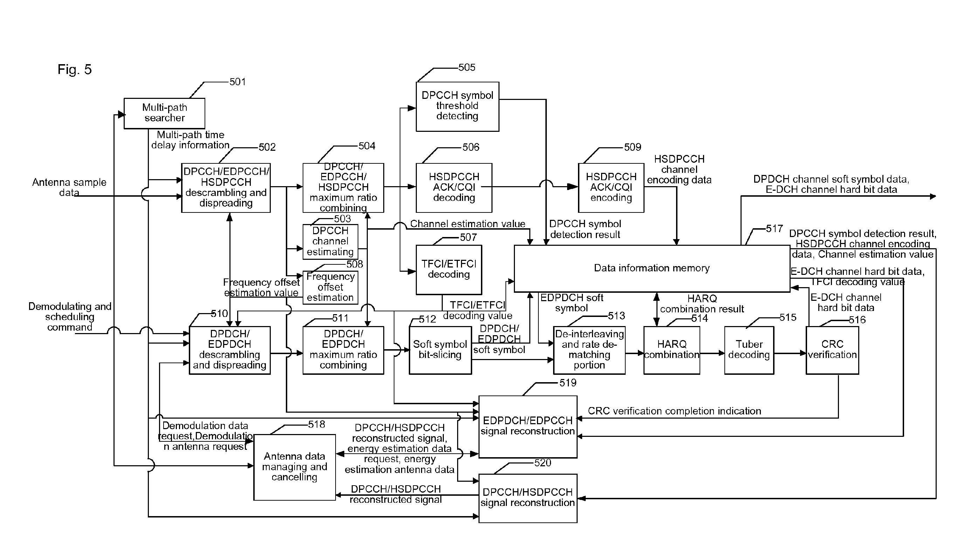

The embodiment of the disclosure provides a function entity applied to uplink specific channel interference cancellation according to the above procedure, as shown in Fig. 5, which includes:
an antenna sample result multi-path searcher 501, obtains and sends multi-path time delay information of the user to a DPCCH/EDPCCH/HSDPCCH descrambling and dispreading portion 502, a DPDCH/EDPDCH descrambling and dispreading portion 510, an EDPDCH/EDPCCH signal reconstruction portion 519, and a DPCCH/HSDPCCH signal reconstruction portion 520. The multi-path searcher 501 is composed of N multi-path searching units, performs multi-path energy calculation on the antenna sample data in a certain searching window scope, and performs filtering and sorting on multi-path energy; finally searches out 1∼M (in the disclosure M is 8) multi-path time delay information for each user, and outputs the multi-path time delay information to a descrambling and dispreading unit.

The DPCCH/EDPCCH/HSDPCCH descrambling and dispreading portion 502 obtains multi-path time delay information and a frequency offset estimation value, performs multi-path descrambling and dispreading and frequency offset compensation on the user, to obtain and send DPCCH, E-DPCCH, and HS-DPCCH multi-path symbol data to a DPCCH/EDPCCH/HSDPCCH maximum ratio combining portion 504, a DPCCH channel estimating portion 503, and a frequency offset estimating portion 508. The DPCCH/EDPCCH/HSDPCCH descrambling and dispreading portion 502 performs descrambling and dispreading on the antenna sample data according to a product of a spreading code and a scrambling code of a DPCCH, E-DPCCH, and HS-DPCCH channel and the input multi-path time delay information, to obtain the multi-path symbol data before DPCCH, E-DPCCH, and HS-DPCCH frequency offset compensation, and then performs the frequency offset compensation of plural multiplication according to a frequency offset compensation value input by the frequency offset estimating portion 508 and the multi-path symbol data before the frequency offset compensation, to obtain DPCCH, E-DPCCH, and HS-DPCCH multi-path symbol data.

The DPCCH channel estimating portion 503 obtains the DPCCH multi-path symbol data, performs polarity inversion on the multi-path symbol data according to polarity of a known pilot frequency sequence aiming at J time interval (in the embodiment of the disclosure J is 1) multi-path pilot frequency symbols in continuous time, and then performs accumulating and averaging, and takes a final mean as a channel estimation value of corresponding multiple paths, and sends the final mean to the DPCCH/EDPCCH/HSDPCCH maximum ratio combining portion 504, a DPDCH/EDPDCH maximum ratio combining portion 511, and a data information memory 517.

The frequency offset estimating portion 508 obtains DPCCH channel multi-path symbol data, performs the frequency offset estimation, performs conjugated multiplication on the multi-path symbol data of each path continuous time, accumulates the result with K time intervals (in the embodiment of the disclosure K is 15, namely 1 frame), and then accumulates accumulation results of all multiple paths, to obtain and sent a final frequency offset estimation result to the DPCCH/EDPCCH/HSDPCCH descrambling and dispreading portion 502, the DPDCH/EDPDCH descrambling and dispreading portion 510, the EDPDCH/EDPCCH signal reconstructing portion 519, and the DPCCH/HSDPCCH signal reconstructing portion 520. The frequency offset estimation is a kind of pre-estimation, and adopts a current time period to pre-estimate a frequency offset situation of a next time period, so a frequency offset estimation value of a partial current time period of the frequency offset estimation value is needed to be the frequency offset estimation value obtained in a previous frequency offset estimation time period.

The DPCCH/EDPCCH/HSDPCCH maximum ratio combining portion 504 obtains the multi-path symbol data output by the DPCCH/EDPCCH/HSDPCCH descrambling and dispreading portion 502 and the channel estimation value input by the DPCCH channel estimation portion 503, completes RAKE combination and channel outgoing modulation, to obtain the symbol data of the combined DPCCH, E-DPCCH, and HS-DPCCH channel, sends DPCCH channel symbol data to a DPCCH symbol threshold detecting portion 505, sends HS-DPCCH channel symbol data to a HSDPCCH ACK/CQI decoding portion 506, and sends DPCCH and E-DPCCH channel symbol data to a TFCI/ETFCI decoding portion 507.

The DPCCH symbol threshold detecting portion 505, obtains the DPCCH channel symbol data to perform threshold detection, marks a symbol of which a signal amplitude is lower than a threshold value in a DPCCH symbol field as non-reconstruction data, and during DPCCH channel symbol reconstruction processing, does not perform reconstruction processing on the symbol, and obtains and sends a DPCCH symbol detection result to the data information memory 517.

The HSDPCCH ACK/CQI decoding portion 506 obtains the HS-DPCCH channel symbol data, extracts the symbol data of an ACK and CQI field, calculates ACK and CQI field pre-encoding data according to an ACK and CQI encoding sequence in the 3GPP 25212 protocol by adopting a maximum likelihood method, and sends the ACK and CQI field pre-encoding data to a HSDPCCH ACK/CQI encoding portion 509.

The HSDPCCH ACK/CQI encoding portion 509 obtains the ACK and CQI field pre-encoding data output by the HSDPCCH ACK/CQI decoding portion, encodes the ACK and CQI field pre-encoding data in accordance with an encoding way of the 3GPP 25212 protocol to obtain and output a physical channel transmission symbol data. Accurate ACK and CQI encoding data may be obtained by re-encoding, and the ACK and CQI encoding data are sent to the data information memory 517.

The TFCI/ETFCI decoding 507 extracts a DPCCH TFCI symbol from the DPCCH channel symbol data, wherein the E-DPCCH channel symbol data is an E-TFCI symbol; performs TFCI and E-TFCI decoding on TFCI and E-TFCI symbol data of one TTI; because decoding principles of a TFCI and an E-TFCI are the same, the same decoding method may be adopted; the embodiment of the disclosure adopts a classic fast Hadamard transformation method, decodes a TFCI and E-TFCI field symbol of each TTI into 10 bits data before encoding, and sends the 10 bits data to the DPDCH/EDPDCH descrambling and dispreading portion 510, the EDPDCH/EDPCCH signal reconstructing portion 519, and the data information memory 517. According to the 10 bits data before encoding, a spreading code adopted by a specific data channel may be queried through a 3GPP protocol standard, and the spreading code is configured as data channel descrambling and dispreading.

The DPDCH/EDPDCH descrambling and dispreading portion 510 receives an external demodulation scheduling command, wherein the demodulation scheduling command includes antenna data timing information, and a data packet length, and takes these information as demodulation data request and sends these information to an antenna data managing and cancelling portion 518; and receives a TFCI/ETFCI decoding value, to obtain a data channel spreading code. The antenna data managing and cancelling 518 returns demodulation antenna data, and the DPDCH/EDPDCH descrambling and dispreading portion 510 performs descrambling and dispreading processing on the returned antenna data. According to the product of the spreading code and the scrambling code of the DPDCH and E-DPDCH channel, and the input multi-path phase information, antenna sample data are descrambled and dispread to obtain DPDCH and E-DPDCH multi-path symbol data, wherein the spreading code and the scrambling code are generated in accordance with description in the 3GPP 25213 protocol; the frequency offset compensation is performed on the multi-path symbol data according to a frequency offset estimation value output by the frequency offset estimating portion, and then the multi-path symbol data are output to a later level module. The demodulation scheduling command may iterate the user data which are not correctly demodulated several times, within a time delay request time limit of uplink and downlink data transmission, to sufficiently remove interference of other users on the data which are not correctly demodulated, to finally demodulate correct user data. An external demodulation command shall follow the following rules:
1. The DPDCH/EDPDCH descrambling and dispreading portion 510 may perform iterated demodulation of a service channel, here the iterated demodulation is referred to: the antenna data of which the interference is partly removed may be obtained by using the service channel correctly passing the CRC verification after demodulation to perform reconstruction and interference cancellation; on this basic a prior service channel not correctly passing the CRC verification after demodulation is demodulated again, and a probability of correct demodulation may be increased, namely benefitting from the interference cancellation; the reconstruction and the interference cancellation are continuously performed on a correctly demodulated channel to benefit other channels.
2. First demodulation scheduling (the first demodulation) is performed after an E-DPDCH channel delay DPCCH of 2ms TTI reaches to N1 slots (a N1 value is determined according to ETFCI decoding delay, and N1 is 5 in the embodiment of the disclosure), and the reconstruction and the interference cancellation are performed on the channel correctly passing the CRC verification.
3. With regard to the E-DPDCH channel of 2ms TTI of which the first demodulation is not correct, the demodulation scheduling is performed again (the second demodulation) after the delay reaches to N2 slots (a N2 value is determined according to 2ms E-DPDCH channel processing delay, namely time for obtaining a CRC verification result, and N2 is 9 in the embodiment of the disclosure), and the reconstruction and the interference cancellation are performed on the channel correctly passing the CRC verification.
4. The demodulation scheduling is performed after the E-DPDCH channel of 10ms TTI delays N3 slots (a N3 value is determined according to 10ms E-DPDCH channel processing delay, namely the time for obtaining the CRC verification result, and N3 is 17 in the embodiment of the disclosure), and the reconstruction and the interference cancellation are performed on the channel correctly passing the CRC verification.
5. With regard to the E-DPDCH channel of 2ms TTI of which the second demodulation is not correct, after retransmission the demodulation scheduling is performed again on a previous HARQ (re-demodulation) after the delay reaches to N4 slots (a N4 value is determined according to 2ms E-DPDCH channel second demodulation processing delay, namely the time for obtaining a second demodulation CRC verification result, and N4 is 29 in the embodiment of the disclosure), to improve a gain of HARQ combination, and the reconstruction and the interference cancellation are performed on the channel correctly passing the CRC verification.

With regard to the DPDCH channel, the demodulation scheduling is performed after the delay reaches to N5 slots (a N5 value is determined according to the time for the E-DPDCH channel to complete the interference cancellation, and N5 is 37 in the embodiment of the disclosure).

A size relationship among the above 5 values is N1 < N2 < N3 < N4 < N5.

The DPDCH/EDPDCH maximum ratio combining 511 obtains the multi-path symbol data output by the DPDCH/EDPDCH descrambling and dispreading portion 510 and the channel estimation value input by the DPCCH channel estimating portion 503, and completes RAKE combination and channel outgoing modulation, to obtain the symbol data of the DPDCH and E-DPDCH channel, and sends the symbol data to a soft symbol bit-slicing portion 512.

The bit-slicing portion 512 calculates a symbol mean value of each TTI with the symbol data of the PDCH and E-DPDCH channel output by the DPDCH/EDPDCH maximum ratio combining portion 511 according to a symbol amount of the TTI; all symbol data of this TTI are divided by this mean value and multiplied by a fixed calibration constant (in the embodiment of the disclosure, this value is 16), to obtain and output 8 bit length DPDCH and E-DPDCH channel soft symbol data to the data information memory 517, if the E-DPDCH channel soft symbol data are processed then notification is sent to a rate de-matching portion 513.

The de-interleaving and rate de-matching portion 513 receives soft symbol processing notification output by the DPDCH/EDPDCH maximum ratio combining portion 511, reads out E-DPDCH channel soft symbol data from the data information memory 517, and complete an inverse procedure in accordance with an interleaving and rate matching method in the 3GPP 25213 protocol. With regard to two modulation ways BPSK/4PAM, one or two deinterleavers are separately adopted; a deinterleaver body is a two-dimensional matrix storage (for example RAM) on one logic, a matrix column amount is fixed as 30; a row amount mainly depends on a TTI data amount in each transmission interval, and in a compression mode the row amount is needed to be compensated with 0 when the row amount is not an integer multiplied by 30. With regard to BPSK modulation, a de-interleaving operation contrary interleaving at a sender end is performed in sequence on the data of each TTI, which includes writing by columns and reading out by rows, and second de-interleaving between columns before reading out; with regard to 4PAM modulation, an odd data sequence enters one deinterleaver and an even sequence enters another deinterleaver; an output sequence is identical to an enter sequence, and other operations are the same as de-interleaving operation when performing BPSK modulation. A rate de-matching procedure is a procedure of performing transparent transmitting, de-duplicating, or de-punching on de-interleaved data; whether to perform transparent transmitting, de-duplicating, or de-punching depends on whether a system bit and punching rate is to be transmitted or not. This information may be calculated through current re-transmission number, an encoded system bit length, a data length being able to be carried by a TTI physical frame. If the system bit and punching rate is obtained, whether to perform transparent transmitting, de-duplicating, or de-punching may be judged according to a difference between a punching rate of rate de-matching currently performed and an desired punching rate, so as to make a current punching rate to approach the desired punching rate, a de-interleaving and rate de-matching symbol obtained after de-interleaving and rate de-matching is sent to a HARQ combination portion 514.

The HARQ combination portion 514 completes HARQ combination with the de-interleaving and rate de-matching symbol output by the de-interleaving and rate de-matching portion 513. With regard to the same HARQ process, if the CRC verification after previous transmission decoding is not passed, then high layer software may schedule UE re-transmission, and simultaneously the HARQ combination portion 514 may a previous transmission result into the data information memory 517. Combination may be performed on the data of this scheduled re-transmission after the rate de-matching, and the previous transmission result (which is taken out from the data information memory), signal quality may be effectively improved, and the probability that this decoding is correct. The HARQ combination portion 514 first judges whether HARQ data is re-transmission data or not, if the HARQ data are not the re-transmission data, the HARQ data are directly stored into the data information memory 517; if the HARQ data are the re-transmission data, then the previous transmission result of this HARQ process is read out from the data information memory 517, accumulating and averaging are performed on the re-transmission data and the previous transmission result, to obtain a HARQ combination result, and the HARQ combination result is sent to the data information memory 517 and a tuber decoding portion 515.

The tuber decoding portion 515 performs turbo decoding processing on the HARQ combination result output by the HARQ combination portion 514, wherein the turbo decoding adopts a system bit and a verification bit to perform iterated decoding; and outputs a turbo decoding result to a CRC verification portion 516. The tuber decoding portion 515 is composed of multiple (in the embodiment of the disclosure 8 turbo sub-decoders are adopted) turbo sub-decoders to improve turbo decoding processing rate. The turbo decoding result is sent to the CRC verification portion 516.

The CRC verification portion 516 completes a CRC calculation of a non-CRC additional part in the turbo decoding result according to a 3GPP 25213 protocol CRC calculation method, compares a CRC calculation result and a CRC additional data, if a comparison result is consistent, then considers that received data is correct, otherwise considers that the received data is wrong and then removes a CRC additional part from the turbo decoding result, and stores the turbo decoding result into the data information memory, and outputs a CRC verification completion indication to the EDPDCH/EDPCCH signal reconstruction portion 519.

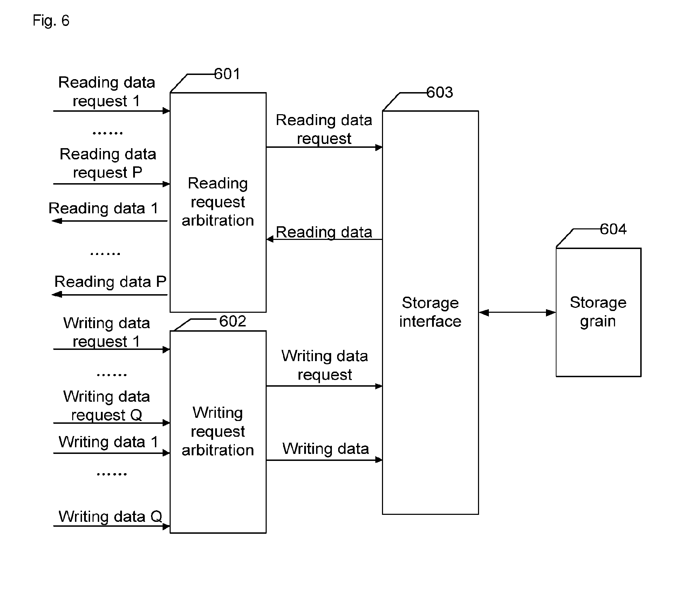

The data information memory 517 provides a data storage function, and implements a multi-port storage; a physical storage unit adopts an on-chip storage unit or an off-chip storage unit according to a requirement, in the disclosure because there are many stored data, this data information memory is mapped into an external DDR. A data information memory structure is shown in Fig. 6, and is composed of a reading request arbitration 601, a writing request arbitration 602, a storage interface 603, and a storage grain 604. The reading request arbitration 601 completes a reading data request and reading data return control; the writing request arbitration 602 completes writing request arbitration and writing data receipt control; the storage interface 603 converts a reading data request, reading data, a writing data request, and writing data into a command corresponding to the storage grain; and the storage grain 604 provides a physical storage space. Connecting with the data information memory, a reading direction contains two groups of information, namely the reading data request, and the reading data, a writing direction contains the writing data request and writing data. In the disclosure, P is 5, the followings are corresponded: de-interleaving and rate de-matching portion 513 EDPDCH soft symbol data reading, HARQ combination portion 514 previous HARQ process soft symbol reading, an EDPDCH/EDPCCH signal reconstruction portion 519 E-DCH channel hard bit, TFCI decoding value reading, a DPCCH/HSDPCCH signal reconstruction portion 520 DPCCH symbol detection result, HSDPCCH channel encoding data, channel estimation value reading; external DPDCH channel soft symbol data, E-DCH channel hard bit data reading; Q is 7, the followings are corresponded: channel estimation value writing of the DPCCH channel estimating portion, DPCCH symbol detection result writing of the DPCCH symbol threshold detecting portion 505, HSDPCCH channel encoding data writing of the HSDPCCH ACK/CQI encoding portion 509, TFCI/ETFCI decoding value writing of the TFCI/ETFCI decoding portion 507, DPDCH/EDPDCH soft symbol writing of the soft symbol bit-slicing portion 512, HARQ combination result writing of the HARQ combination portion 514, and E-DCH channel hard bit data writing of the CRC verification portion 516. The DPDCH channel soft symbol is output external to perform subsequent symbol level processing of the DPDCH channel, E-DCH channel hard bit data are output external for subsequent processing.

The DPCCH/HSDPCCH signal reconstruction portion 520 receives the multi-path time delay information and performs fixed time delay thereof, for DPCCH and HS-DPCCH channel reconstructed signal filtering. Reconstruction time delays of the DPCCH and the HS-DPCCH are different, two kinds of time delays are needed to be performed, in the embodiment of the disclosure, the DPCCH delays 2.5-3 slots, HS-DPCCH delays 5-7 slots, and a specific value is determined according to a configuration parameter. The DPCCH/HSDPCCH signal reconstruction portion 520 starts DPCCH channel reconstruction when fixedly delaying 2.5-3 slots, and starts HS-DPCCH channel reconstruction when delaying 5-7 slots.

The EDPDCH/EDPCCH signal reconstruction portion 519 may be divided into four parts according to a system structure, a first part is scheduling control processing, which completes scheduling control and parameter data preparation of various downstream modules. A second part is channel encoding, which completes symbol encoding of the data channel and the control channel. The third part is channel estimation parameter calculating, which calculates a corresponding channel estimation parameter according to a symbol encoding result and antenna data. The forth part is reconstruction operating, which reconstructs a signal form and sends multiple signals the antenna data managing and cancelling portion 518 to perform interference cancellation processing.

The antenna data managing and cancelling portion 518, as shown in Fig. 8 after receiving a demodulation data request of the DPDCH/EDPDCH descrambling and dispreading portion 510, and an energy estimation data request of the EDPDCH/EDPCCH signal reconstruction portion 519, adding a reading data to be cancelled request sent by an internal reconstructed signal cache control 702 thereof, performs arbitration on these three reading requests in a reading antenna data request arbitration 701; the reading antenna data request arbitration 701 sends valid reading data request to an antenna data storage control 704 according to priorities of the three requests; the reading antenna data request arbitration 701 receives the reading data returned by the antenna data storage control 704, and allocates the reading data to a corresponding request source. The internal reconstructed signal cache control 702 receives the DPCCH/HSDPCCH reconstructed signal sent by the DPCCH/HSDPCCH signal reconstruction portion 520 and the EDPCCH/EDPDCH reconstructed signal sent by the EDPDCH/EDPCCH signal reconstruction portion 519, and stores the two reconstructed signal into a reconstructed signal storage grain 703; the internal reconstructed signal cache control 702 selects in a time sequence from these two kinds of reconstructed signals, timing information of a certain reconstructed signal, sends the reading data to be cancelled request to the reading antenna data request arbitration 701; after the reading antenna data request arbitration 701 returns the data to be cancelled, the reconstructed signal cache control 702 extracts the reconstructed signal from the reconstructed signal storage grain 703, and output the data to be cancelled and the reconstructed signal to a reconstructed signal cancelling 705. The reconstructed signal cancelling 705 subtracts the reconstructed signal from the data to be cancelled, and outputs cancelled data to the reconstructed signal cache control 702. The reconstructed signal cache control 702 sends the cancelled data to the antenna data storage control 704. The antenna data storage control 704 converts the reading antenna data request sent by the reading antenna data request arbitration 701 and the writing antenna data request sent by the reconstructed signal cache control 702 into a command of an antenna data storage grain 706, and output reading antenna data to the reading antenna data request arbitration 701. The antenna data storage grain 706 provides an antenna data storage unit, considering uplink and downlink data processing time delay time limit, this storage unit stores the antenna data having 40 time slots; in order to provide a high speed data bandwidth, the storage grain adopts an on-chip static storage, a data width is 1024 bits.

The function entity provided by the embodiment of the disclosure can implement the reconstruction and the interference cancellation of a specific control channel (DPCCH/HS-DPCCH/E-DPCCH) and a specific data channel (E-DPDCH); has a performance higher than that of a traditional uplink specific control channel interference device, and improves an uplink specific physical channel receiving performance; simultaneously has threshold control or decoding verification when reconstructing a signal, and has high accuracy of reconstructing the signal; supports flexibly scheduled DPDCH/EDPDCH channel processing, can repeatedly perform demodulation in antenna data cancelled many times for a user experiencing decoding error, according to a processing time limit constraint of an actual system, and improves user decoding performance. Through practical measurement, a system capacity improvement thereof is 30%-80%.

In order to achieve the above purpose, the embodiment of the disclosure further provides a base station, which includes any one of the channel interference cancellation devices described above.

All those described above are only preferred embodiments of the disclosure, and are not used to limit the scope of protection of the disclosure.

### INDUSTRIAL APPLICABILITY

The embodiment of the disclosure acquires original antenna sample data to be cancelled; performs multi-path energy calculation according to the original antenna sample data, and determines multiple target multi-path time delay information according to a result of the calculation; performs signal reconstruction in the uplink specific channel according to the original antenna data and the target multi-path time delay information, to obtain a reconstructed signal; and cancels the reconstructed signal in the original antenna sample data, to obtain target antenna data. By adopting the embodiment of the disclosure, reconstruction and interference cancellation of the DPCCH channel/HS-DPCCH/E-DPCCH channel, and the E-DPDCH channel can be completed.

## Claims

1. A channel interference cancellation method, applied to a base station, and used for an uplink specific channel in a Wideband Code Division Multiple Access (WCDMA) system, comprising:
acquiring original antenna sample data to be cancelled;
performing multi-path energy calculation according to the original antenna sample data, and determining multiple target multi-path time delay information according to a result of the calculation;
performing signal reconstruction in the uplink specific channel according to the original antenna data and the target multi-path time delay information, to obtain a reconstructed signal; and
cancelling the reconstructed signal in the original antenna sample data, to obtain target antenna data.

2. The channel interference cancellation method according to claim 1, further comprising:
performing descrambling and dispreading in the uplink specific channel, according to the original antenna data and the target multi-path time delay information, to obtain multi-path symbol data;
performing channel estimation according to the multi-path symbol data, to obtain a channel estimation value;
performing maximum ratio combination on the multi-path symbol data according to the channel estimation value; and
performing detecting and decoding processing on the multi-path symbol data completing the maximum ratio combination;
the performing signal reconstruction in the uplink specific channel according to the original antenna data and the target multi-path time delay information to obtain the reconstructed signal comprises: performing the signal reconstruction in the uplink specific channel, according to the result of performing the detecting and decoding processing on the multi-path symbol data, to obtain the reconstructed signal.

3. The channel interference cancellation method according to claim 2, further comprising:
performing frequency offset estimation according to the multi-path symbol data, and performing frequency offset compensation on the multi-path symbol data according to the result of the frequency offset estimation.

4. The channel interference cancellation method according to claim 2, wherein when the channel interference cancellation method is applied to a control channel in the uplink specific channel, the performing the detecting and decoding processing on the multi-path symbol data comprises:
performing TFCI decoding on the multi-path symbol data in an uplink specific control channel;
performing ACK and CQI decoding and encoding on the multi-path symbol data in a high speed uplink specific control channel; and
performing E-TFCI decoding on the multi-path symbol data in an enhanced uplink specific control channel.

5. The channel interference cancellation method according to claim 4, wherein the performing the detecting and decoding processing on the multi-path symbol data further comprises:
performing threshold detection on the multi-path symbol data in the uplink specific control channel.

6. The channel interference cancellation method according to claim 2, wherein when the channel interference cancellation method is applied to a data channel in the uplink specific channel, the performing the detecting and decoding processing on the multi-path symbol data comprises:
performing soft symbol bit-slicing processing on the multi-path symbol data, to obtain soft symbol data of an uplink specific data channel.

7. The channel interference cancellation method according to claim 6, wherein when the channel interference cancellation method is applied to an enhanced uplink specific data channel, the performing the detecting and decoding processing on the multi-path symbol data further comprises:
performing successively de-interleaving, rate de-matching, HARQ combination, Turbo decoding, and CRC verification on the soft symbol data in the enhanced uplink specific data channel.

8. The channel interference cancellation method according to claim 2, wherein when the channel interference cancellation method is applied to a data channel in the uplink specific channel, the performing the descrambling and dispreading in the uplink specific channel, according to the original antenna data and the target multi-path time delay information, to obtain the multi-path symbol data comprises:
performing multiple descrambling and dispreading according to the original antenna data and the target multi-path time delay information, to obtain the multi-path symbol data.

9. The channel interference cancellation method according to claim 2, wherein when the channel interference cancellation method is applied to a control channel in an uplink specific control channel, the performing the signal reconstruction in the uplink specific channel, according to the result of performing the detecting and decoding processing on the multi-path symbol data, to obtain the reconstructed signal comprises:
delaying according to a pre-set time delay parameter; after delaying according to the pre-set time delay parameter, performing spreading and scrambling on the multi-path symbol data according to the result of performing the detecting and decoding processing on the multi-path symbol data;
determining a phase offset rotation filtering coefficient, according to the channel estimation value; and
performing filtering on the spread and scrambled multi-path symbol data, according to the phase offset rotation filtering coefficient, to obtain the reconstructed signal.

10. The channel interference cancellation method according to claim 2, wherein when the channel interference cancellation method is applied to an enhanced uplink specific channel, the performing the signal reconstruction in the uplink specific channel, according to the result of performing the detecting and decoding processing on the multi-path symbol data, to obtain the reconstructed signal comprises:
performing channel encoding in the enhanced uplink specific channel, according to the result of performing the detecting and decoding processing on the multi-path symbol data, to obtain a channel encoding symbol;
performing spreading and scrambling on the channel encoding symbol;
calculating a channel estimation parameter according to the channel encoding symbol and the original antenna data;
determining a phase offset rotation filtering coefficient, according to the channel estimation parameter; and
performing filtering on the spread and scrambled channel encoding symbol, according to the phase offset rotation filtering coefficient, to obtain the reconstructed signal.

11. The channel interference cancellation method according to claim 9 or 10, wherein the performing the signal reconstruction in the uplink specific channel, according to the result of performing the detecting and decoding processing on the multi-path symbol data, to obtain the reconstructed signal further comprises:
performing alignment and accumulation on the reconstructed signal.

12. A channel interference cancellation device, applied to a base station, and used for an uplink specific channel in a Wideband Code Division Multiple Access (WCDMA) system, comprising:
an acquiring module, configured to acquire original antenna sample data to be cancelled;
a multi-path energy calculating module, configured to perform multi-path energy calculation according to the original antenna sample data, and determine multiple target multi-path time delay information according to a result of the calculation;
a reconstructing module, configured to perform signal reconstruction in the uplink specific channel according to the original antenna data and the target multi-path time delay information, to obtain a reconstructed signal; and
a cancelling module, configured to cancel the reconstructed signal in the original antenna sample data, to obtain target antenna data.

13. The channel interference cancellation device according to claim 12, further comprising:
a descrambling and dispreading module, configured to perform descrambling and dispreading in the uplink specific channel, according to the original antenna data and the target multi-path time delay information, to obtain multi-path symbol data;
a channel estimation value determining module, configured to perform channel estimation according to the multi-path symbol data, to obtain a channel estimation value;
a maximum ratio combining module, configured to perform maximum ratio combination on the multi-path symbol data according to the channel estimation value; and
a processing module, configured to perform detecting and decoding processing on the multi-path symbol data completing the maximum ratio combination; wherein
the reconstructing module is further configured to perform the signal reconstruction in the uplink specific channel, according to a result of performing the detecting and decoding processing on the multi-path symbol data, to obtain the reconstructed signal.

14. The channel interference cancellation device according to claim 13, further comprising:
a frequency offset estimating module, configured to perform frequency offset estimation according to the multi-path symbol data, and perform frequency offset compensation on the multi-path symbol data according to the result of the frequency offset estimation.

15. The channel interference cancellation device according to claim 13, wherein when the channel interference cancellation device is applied to a control channel in the uplink specific channel, the processing module is further configured to:
perform TFCI decoding on the multi-path symbol data in an uplink specific control channel;
perform ACK and CQI decoding and encoding on the multi-path symbol data in a high speed uplink specific control channel; and
perform E-TFCI decoding on the multi-path symbol data in an enhanced uplink specific control channel.

16. The channel interference cancellation device according to claim 15, wherein the processing module is further configured to:
perform threshold detection on the multi-path symbol data in the uplink specific control channel.

17. The channel interference cancellation device according to claim 13, wherein when the channel interference cancellation device is applied to a data channel in the uplink specific channel, the processing module is further configured to:
perform soft symbol bit-slicing processing on the multi-path symbol data, to obtain soft symbol data of an uplink specific data channel.

18. The channel interference cancellation device according to claim 17, wherein when the channel interference cancellation device is applied to an enhanced uplink specific data channel, the processing module is further configured to:
perform successively de-interleaving, rate de-matching, HARQ combination, Turbo decoding, and CRC verification on the soft symbol data in the enhanced uplink specific data channel.

19. The channel interference cancellation device according to claim 13, wherein when the channel interference cancellation device is applied to a data channel in the uplink specific channel, the descrambling and dispreading module is further configured to:
perform multiple descrambling and dispreading according to the original antenna data and the target multi-path time delay information, to obtain the multi-path symbol data.

20. The channel interference cancellation device according to claim 13, wherein when the channel interference cancellation device is applied to a control channel in the uplink specific channel, the reconstructing module comprises:
a delaying module, configured to delay according to a pre-set time delay parameter;
a first spreading and scrambling module, configured, after delaying according to the pre-set time delay parameter, to perform spreading and scrambling on the multi-path symbol data according to the result of performing the detecting and decoding processing on the multi-path symbol data;
a first filtering coefficient determining module, configured to determine a phase offset rotation filtering coefficient, according to the channel estimation value; and
a first filtering module, configured to perform filtering on the spread and scrambled multi-path symbol data, according to the phase offset rotation filtering coefficient, to obtain the reconstructed signal.

21. The channel interference cancellation device according to claim 13, wherein when the channel interference cancellation device is applied to an enhanced uplink specific channel, the reconstructing module comprises:
a channel encoding module, configured to perform channel encoding in the enhanced uplink specific channel, according to the result of performing the detecting and decoding processing on the multi-path symbol data, to obtain a channel encoding symbol;
a second spreading and scrambling module, configured to perform spreading and scrambling on the channel encoding symbol;
a channel estimation parameter determining module, configured to calculate a channel estimation parameter according to the channel encoding symbol and the original antenna data;
a second filtering coefficient determining module, configured to determine a phase offset rotation filtering coefficient, according to the channel estimation parameter; and
a second filtering module, configured to perform filtering on spread and scrambled channel encoding symbol, according to the phase offset rotation filtering coefficient, to obtain the reconstructed signal.

22. The channel interference cancellation device according to claim 20 or 21, wherein the reconstructing module comprises:
an aligning and accumulating module, configured to perform alignment and accumulation on the reconstructed signal.

23. A base station, comprising the channel interference cancellation device according to any one of claims 12 to 22.
